Europäisches Patentamt

European Patent Office

Office européen des brevets

(19)

(11) Veröffentlichungsnummer: **0 130 402 B1**

(12) **EUROPÄISCHE PATENTSCHRIFT**

(45) Veröffentlichungstag der Patentschrift: **15.05.91**

(51) Int. Cl.⁵: **B62D 53/08**

(21) Anmeldenummer: **84106406.6**

(22) Anmeldetag: **05.06.84**

(54) **Kupplungsplatte für eine Sattelkupplung.**

(30) Priorität: **01.07.83 CH 3631/83**

(43) Veröffentlichungstag der Anmeldung:
**09.01.85 Patentblatt 85/02**

(45) Bekanntmachung des Hinweises auf die
Patenterteilung:
**15.05.91 Patentblatt 91/20**

(84) Benannte Vertragsstaaten:
**DE FR GB IT SE**

(56) Entgegenhaltungen:
**US-A- 2 481 695
US-A- 3 463 512**

(73) Patentinhaber: **GEORG FISCHER AKTIENGE-
SELLSCHAFT
Mühlentalstrasse 105
CH-8201 Schaffhausen(CH)**

(72) Erfinder: **Aschwanden, Felix
Limmattalstrasse 58
CH-8954 Geroldswil(CH)**
Erfinder: **Kopp, Hans
Dorfstrasse 445
Ch-8448 Uhwiesen(CH)**
Erfinder: **Jakob, Lothar
Schrotzburgstrasse 1
W-7702 Gottmadingen(DE)**

## Beschreibung

Die vorliegende Erfindung betrifft eine Kupplungsplatte für eine Sattelkupplung, sowie ein Verfahren zu deren Herstellung.

Um den Verschleiss in den Bereichen hoher Flächenpressung zwischen der Auflagefläche der Kupplungsplatte und der Drehplatte herabzusetzen, ist es bekannt, in der Plattenoberfläche Schmiernuten anzubringen. In den Schmiernuten sind Schmiermittelzuflussbohrungen vorgesehen, die die Speisung der Schmiernuten über Schmierleitungen gewährleisten. Die Schmierleitungen sind in der Regel unter der Kupplungsplatte angebracht. Meistens handelt es sich dabei um vorgefertigte Leitungen zum Beispiel aus Kunststoff oder Stahl.

Nachteilig bei diesen bekannten Ausführungen ist vor allem, dass die freiliegenden Leitungen oft brechen (beschädigen) und die Schmiermittelzufuhr nicht mehr gewährleisten.

Durch die US-A-3463512 ist eine Sattelkupplung mit einer Drehkranz-Andordnung bekanntgeworden, wobei in dieser Schrift lediglich eine Schmierung zwischen einem ersten und einem zweiten Drehkranzelement ersichtlich ist, welche die Plattenbewegung im Fahrbetrieb erleichtern soll. Eine Schmierung der Auflagefläche der Kupplungsplatte, mit der der Anhänger in Kontakt kommt, um die Reibkräfte zwischen Auflieger und Kupplungsplatte zu verringern, ist dieser Schrift nicht entnehmbar.

Aufgabe der vorliegenden Erfindung ist es, ein Schmiersystem vorzuschlagen, bei dem die Schmierleitungen weder durch Wettereinflüsse noch durch Schmutz- oder sonstigen Einwirkungen beschädigt werden können. Zudem soll die vorgeschlagene Lösung hinsichtlich Bearbeitungs- und Montageaufwand eine Optimierung bringen.

Diese Aufgabe wird erfahrungsgemäss durch die Lehre des kennzeichnenden Teiles der Ansprüche 1 und 3 gelöst.

Weitere erfindungsgemässe Merkmale ergeben sich aus den abhängigen Ansprüchen.

Die Erfindung wird nachfolgend anhand eines in den Figuren dargestellten bevorzugten Ausführungsbeispiels näher erläutert.
Es zeigt:

    Fig. 1    eine Draufsicht auf eine erfindungsgemässe Kupplungsplatte,

    Fig. 2    einen Schnitt entlang der Linie A - A.

Die erfindungsgemäss hergestellte Kupplungsplatte 1 für eine Sattelkupplung weist Schmiernuten 2 in der Plattenoberfläche 1a auf. Diese Schmiernuten dienen zur Aufnahme des Schmiermittels, um eine Schmierung möglichst der gesamten Auflagefläche der Sattelplatte und insbesondere deren am stärksten beanspruchten Flächenbereiche zu gestatten. Innerhalb der Schmiernuten sind Schmiermittelzuflussbohrungen 3 angeordnet, die den kontinuierlichen Schmiermittelzufluss gewährleisten. Die schmiermittelbohrungen 3 können auch ausserhalb der Schmiernuten vorgesehen sein und sind miteinander mittels Schmierleitungen 4 verbunden.

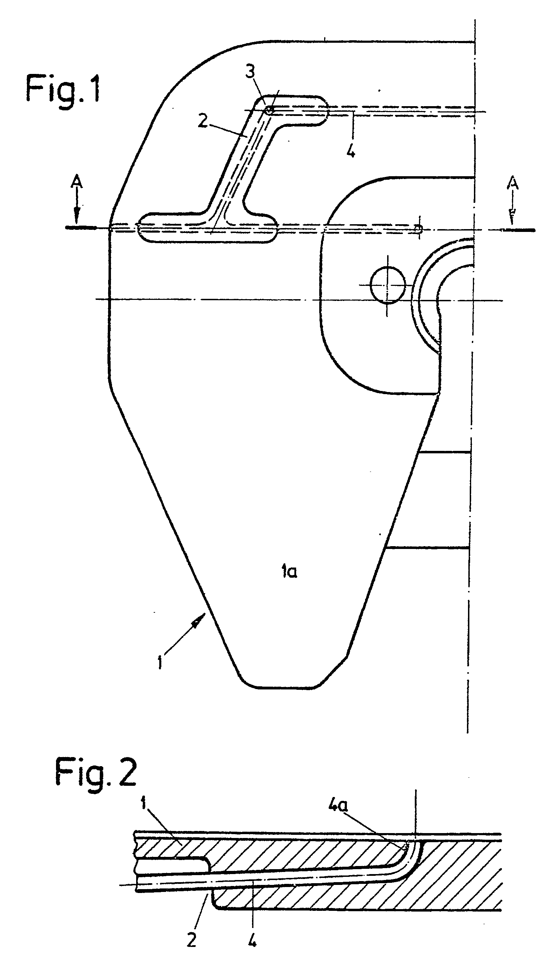

Wie die Fig. 2 zeigt, sind diese Schmierleitungen innerhalb der Platte vorgesehen, d.h. sie sind vom Plattenmaterial im wesentlichen entlang ihres gesamten Umfanges ummantelt.

Die Herstellung der Kupplungsplatte erfolgt in einem Giessverfahren. Die Schmierleitungen werden in die Platte hineingegossen. D.h. dass die Kupplungsplatte mit Hohlräumen gegossen wird, die am fertigen Stück die Leitungen definieren. Es ist aber auch möglich, die Leitungen mit Hilfe eines Rohres zu giessen, wobei nach erfolgter Abkühlung das Rohr in der Platte verbleibt. In diesem Fall verschweisst das flüssige Metall und das Rohr 4a, oder es findet eine andere adhäsive Verbindung zwischen dem Gussstück und dem Rohr statt. Die Hohlräume können auch durch Einlegen von einfachen Sandkernen hergestellt werden. Das Rohr 4a kann aus dem Gussmaterial oder aus einem anderen Material vorgesehen sein.

Mit Hilfe des vorgeschlagenen Verfahrens können in der Platte an einer oder an mehreren Stellen gleichzeitig Schmiersysteme eingegossen werden, die weil sie im Gussstück liegen nicht zu beschädigen sind.

## Ansprüche

1. Kupplungsplatte (1) für eine Sattelkupplung, bestehend aus einem Plattenelement, das eine Auflagefläche (1a) für einen Auflieger aufweist und mit Schmiermittelzuflussbohrungen (3) versehen ist, die mittels unter der Auflagefläche (1a) der Platte (1) verlaufenden Schmierleitungen (4) miteinander in Verbindung stehen, dadurch gekennzeichnet, dass die Schmierleitungen (4) unterhalb der Auflagefläche (1a) in der Platte (1) angebracht sind und mindestens in Teilbereichen vom Plattenmaterial ummantelt sind.

2. Kupplungsplatte nach Anspruch 1, dadurch gekennzeichnet, dass die Platte (1) und die Leitungen (4) aus unterschiedlichem Maerial gefertigt sind.

3. Verfahren zur Herstellung von einer Kupplungsplatte nach Anspruch 1 und/oder 2, dadurch gekennzeichnet, dass die Platte (1) gegossen wird, wobei die Schmierleitungen (4) gleichzeitig mit der Platte (1) in diese eingegossen werden.

## Claims

1.  Coupling plate (1) for a saddle coupling, comprising a plate element which has a support surface (1a) for a semi-trailer and is provided with lubricant supply bores (3) which are connected to each other by means of lubricant lines (4) extending below the support surface (1a) of the plate (1), characterised in that the lubricant lines (4) are fitted in the plate (1) beneath the support surface (1a) and are enclosed by the plate material at least in partial regions.

2.  Coupling plate according to claim 1, characterised in that the plate (1) and the lines (4) are made of different material.

3.  Process for the production of a coupling plate according to claim 1 and/or 2, characterised in that the plate (1) is cast and the lubricant lines (4) are cast into the plate (1) at the same time.

## Revendications

1.  Plateau (1) d'accouplement destiné à un attelage à sellette, constitué par un élément formant plateau qui présente une surface d'appui (1a) destiné à une pièce d'appui et qui est muni d'alésages d'alimentation en fluide de graissage, qui sont en communication entre eux au moyen de conduits de graissage (4) qui sont disposés sous la surface d'appui (1a) du plateau (1), caractérisé en ce que les conduits de graissage (4) sont ménagés en-dessous de la surface d'appui (1a) dans le plateau (1) et sont entourés, au moins dans des zones partielles, par le matériau du plateau.

2.  Plateau d'accouplement selon la revendication 1, caractérisé en ce que le plateau (1) et les conduits (4) sont réalisés en des matériaux différents.

3.  Procédé de fabrication d'un plateau d'accouplement selon la revendication 1 et/ou 2, caractérisé en ce que le plateau (1) est moulé, les conduits de graissage (4) étant incorporés par coulée au moulage du plateau (1).

# Fig.1

# Fig. 2